# EUROPÄISCHE PATENTSCHRIFT

(11) **EP 3 158 226 B1**
(45) Veröffentlichungstag und Bekanntmachung des Hinweises auf die Patenterteilung: **11.07.2018**
(21) Anmeldenummer: 15748159.9
(22) Anmeldetag: 17.06.2015
(51) Int. Cl.: F16G 1/10, C09D 123/06, F16G 1/16, F16G 1/28, F16G 5/14, F16G 5/08

(54) **KRAFTÜBERTRAGUNGSRIEMEN MIT EINER POLYETHYLEN-BESCHICHTUNG**
FORCE TRANSMISSION BELT COMPRISING A POLYETHYLENE COATING
COURROIE DE TRANSMISSION DE FORCE PRÉSENTANT UN REVÊTEMENT EN POLYÉTHYLÈNE

(30) Priorität: 17.06.2014 DE 102014008622
(43) Veröffentlichungstag der Anmeldung: 26.04.2017
(73) Patentinhaber: Arntz Beteiligungs GmbH & Co. KG, 37671 Höxter (DE)
(72) Erfinder: GIBSON, Daniel Pattie, 37671 Höxter (DE)
(74) Vertreter: Lins, Martina
(86) Internationale Anmeldenummer: PCT/DE2015/000325
(87) Internationale Veröffentlichungsnummer: WO 2015/192828

(56) Entgegenhaltungen:
- WO-A1-2013/091808
- US-A1- 2004 132 854
- US-A1- 2008 207 371

## Beschreibung

Die Erfindung betrifft einen Kraftübertragungsriemen mit einem einen Grundkörper und eine daran ausgebildete Kraftübertragungszone aufweisenden Riemenkörper sowie mit einer Polyethylen-Beschichtung auf wenigstens einer Oberfläche des Riemenkörpers.

Derartige Kraftübertragungsriemen können Riemen aller Art sein, beispielsweise Keilriemen, Keilrippenriemen, Flachriemen und Zahnriemen in jeglicher Ausgestaltung. Die Kraftübertragungsriemen werden in der Kraftübertragungszone beansprucht, sodass die Laufdauer eines Kraftübertragungsriemens häufig von der Abriebfestigkeit der Oberfläche der Kraftübertragungszone abhängt. Insbesondere bei Zahnriemen findet jedoch auch eine erhebliche Beanspruchung auf der Riemenrückseite statt, wenn auf der Riemenrückseite Halter an dem Riemen befestigt sind, mit denen Gegenstände transportiert und positioniert werden sollen.

Es ist bekannt, die beanspruchte Oberfläche der Kraftübertragungszone eines Riemens dadurch widerstandsfähiger zu gestalten, dass die Oberfläche mit einer Beschichtung aus einem Kunststoff versehen wird, die reibungsvermindernde und wärmereduzierende Eigenschaften hat. Durch US 6,296,588 B1 ist es bekannt, hierfür eine Polyamid-Beschichtung zu verwenden, die einen deutlich höheren Schmelzpunkt als Polyethylen hat.

Ein Kraftübertragungsriemen der eingangs erwähnten Art ist durch WO 2013/091808 A1 bekannt. Der dort vorgesehene Aufbau sieht eine Textilauflage auf der beanspruchten Oberfläche einer durch Polyurethan gebildeten Kraftübertragungszone vor. Das Polyurethan wird dabei regelmäßig in einer Form auf die Textilauflage aufgegossen. Polyurethan hat eine inhärente klebende Eigenschaft, sodass die die Beanspruchungsseite darstellende Oberfläche der Textilauflage hohe Reibungswerte hat, wenn beim Aufgießen flüssiges Polyurethan durch das Textilgewebe hindurch dringt und einen Teil der Oberfläche der Textilauflage bildet. Daher wird vorgeschlagen, die Textilschicht vor dem Aufgießen des Polyurethans auf der Beanspruchungsseite mit einem Copolyamid zu imprägnieren, das nur teilweise in die Textilschicht eindringt, sodass beim Aufgießen des Polyurethans auch dieses in die Textilschicht eindringen und eine feste Verbindung bewirken kann, ohne jedoch auf die gegenüberliegende Oberfläche austreten zu können. Um die Imprägnierungsschicht aus Copolyamid durchgehend dicht zu gestalten, wird, vorzugsweise über eine Haftvermittlerschicht, eine Polyethylen-Beschichtung in Form einer Polyethylen-Folie aufgebracht. Die Polyethylen-Folie hat die Aufgabe, die Imprägnierung durch das Copolyamid insbesondere für den Aufgießvorgang des Polyurethans zu versiegeln. Die Polyethylen-Beschichtung kann daher sehr dünn ausgestaltet sein, sodass sie sich schnell abträgt oder kann sogar durch die Zwischenschicht als peelfähiger Film vor der Ingebrauchnahme des Kraftübertragungsriemens abgezogen werden. Die Polyethylen-Beschichtung besteht vorzugsweise aus HDPE und weist für den genannten Zweck vorteilhafte Eigenschaften auf. Diese bestehen insbesondere in der Reibverminderung, der Dehnbarkeit und der Kohäsion der Folie.

Sofern die Polyethylen-Folie nicht vor Gebrauch abgezogen wird, wird sie im Gebrauch relativ schnell zerstört und löst sich in relativ großflächigen Stücken ab. Hierdurch wird die Brauchbarkeit des Kraftübertragungsriemens beeinträchtigt und eine erhöhte Reibung und Wärmeentwicklung verursacht.

Die US 2008/0207371 A1 offenbart einen gerippten Kraftübertragungsriemen mit einem Ethylenalphaolefin-Riemenelastomer, bei dem wenigstens die Seiten der Rippen oder Zähne mit einem Film beschichtet sind, der aus einem wenigstens teilweise vernetzten Thermoplasten hergestellt ist, der wenigstens 30 % eines LDPEs mit einem Molekulargewicht zwischen 50.000 und 200.000 g/mol aufweist. Die Beschichtung dient der Geräuschreduzierung und Erhöhung der Abriebfestigkeit, wobei das LDPE-Material, vorzugsweise ein Blend mit LDPE, beispielsweise durch Bestrahlung teilweise vernetzt und anschließend bei der Riemenvulkanisation weitervernetzt wird.

Die US 2004/0132854 A1 beschreibt Werkstoffe bzw. Ausgangsmaterialien aus verschiedenen Ethylenpolymeren, die mit ionisierender Strahlung modifiziert wurden, sowie Produkte aus diesen Polymeren, wie beispielsweise Folien. Es werden die Eigenschaften der bestrahlten Polymere beschrieben, u.a. erhöhte Schmelzfestigkeit, Zugfestigkeit, Bruchdehnung, Schlagzähigkeit, Weiterreißfestigkeit, Adhäsion gegenüber polaren Substanzen, thermische Stabilität, Dehnungsverringerung und verringerter Schmelzflussindex. Es wird beschrieben, dass diese bereits bestrahlten Materialien auf einfache Weise weiterverarbeitet und mit üblichen Methoden zu Produkten verarbeitet werden können, beispielsweise durch Spritzguss, Extrusion, in Puderbeschichtungsverfahren und zu Blasfolien. Der vorliegenden Erfindung liegt die Aufgabe zugrunde, einen Kraftübertragungsriemen der eingangs erwähnten Art mit einer verbesserten Haltbarkeit auszustatten.

Diese Aufgabe wird erfindungsgemäß mit einem Kraftübertragungsriemen der eingangs erwähnten Art dadurch gelöst, dass die HDPE-Beschichtung zur Erhöhung ihrer Beanspruchungsbeständigkeit einer Bestrahlung mit einer Dosis zwischen 30 und 300 kGy unterworfen worden ist.

Erfindungsgemäß wird die Oberfläche des Kraftübertragungsriemens durch eine HDPE-Beschichtung geschützt, die aufgrund einer Bestrahlung einerseits stärker vernetzt und daher widerstandsfähiger ist, andererseits aber auch kürzere Molekülketten aufweist, sodass die Materialwerte für Elastizität und Dehnung herabgesetzt sind. Überraschenderweise lässt sich die so bearbeitete Polyethylen-Beschichtung mit einer deutlich höheren Widerstandsfähigkeit ausbilden als ohne Bestrahlung.

Die dabei herabgesetzte Elastizität und Dehnbarkeit hat zur Folge, dass die HDPE-Beschichtung gleichmäßig abgenutzt wird, sich also nicht in größeren zusammenhängenden Stücken ablöst. Es hat sich gezeigt, dass durch die Verwendung der bestrahlten HDPE-Beschichtung, vorzugsweise in Form einer bestrahlten HDPE-Folie, die Gebrauchszeit der HDPE-Beschichtung auf wenigstens das Doppelte bis Dreifache der ursprünglichen Standzeit verlängert werden konnte. Dadurch ist es möglich, die HDPE-Beschichtung als eine Maßnahme zur Verlängerung der Gebrauchsdauer des Kraftübertragungsriemens einzusetzen.

Die Bestrahlung der HDPE-Beschichtung erfolgt vorzugsweise mit Gamma-Strahlen und vorzugsweise mit einer Dosis zwischen 40 und 80 kGy. Auf diese Weise lässt sich eine weitere Vernetzung des Polyethylens in der Beschichtung erreichen, wodurch die Widerstandsfähigkeit der Beschichtung erhöht wird. Für eine Vernetzung der HDPE-Beschichtung eignen sich auch andere ionisierende Strahlen, wie beispielsweise Beta-Strahlung, die vorzugsweise mit einer Dosis zwischen 200 und 300 kGy eingesetzt wird.

Sofern die HDPE-Beschichtung in einem mehrlagigen Beschichtungsaufbau verwendet wird, wie er aus der WO 2013/091808 A1 bekannt ist, erfüllt die HDPE-Beschichtung eine Doppelfunktion, insbesondere bei Riemenkörpern aus Polyurethan, weil die HDPE-Beschichtung einerseits die imprägnierende Wirkung des Copolyamids unterstützt und Polyurethan nicht an die Oberfläche der Kraftübertragungszone treten lässt und andererseits eine laufzeitverlängernde Funktion für die Oberfläche der Kraftübertragungszone erfüllt.

Die erfindungsgemäße Maßnahme ist jedoch nicht auf diesen speziellen Einsatz beschränkt, sondern kann auch ohne eine Textillage und ohne einen mehrschichtigen Aufbau der Beschichtung realisiert werden. So ist es beispielsweise möglich, die Rückseite eines Kraftübertragungsriemens mit der erfindungsgemäßen HDPE-Beschichtung, ggf. mit Hilfe eines Klebers, zu versehen und die Eigenschaften der bestrahlten Polyethylen-Beschichtung zur Verlängerung der Beanspruchungsdauer des Riemens zu verwenden.

Es ist grundsätzlich bekannt, dass Polyethylen durch Bestrahlung in seinen Materialeigenschaften verändert werden kann. Dies gilt beispielsweise für Implantate aus Polyethylen, die allerdings durch die Bestrahlung einen Verlust an Dehnung, Zugfestigkeit und Kerbschlagzähigkeit erleiden, während die Abriebfestigkeit erhöht wird. Es ist jedoch neu und überraschend, dass eine dünne Polyethylen-Beschichtung eines Kraftübertragungsriemens zur Verlängerung der Einsatzdauer des Kraftübertragungsriemens verwendbar ist, wenn die Polyethylen-Beschichtung einer Bestrahlung, insbesondere mit den Gamma-Strahlen mit einer Bestrahlungsdosis zwischen 40 und 80 kGy, behandelt worden ist. Erfindungsgemäß besteht die Polyethylen-Beschichtung aus HDPE. Sie kann mit einem reibungsvermindernden Additiv modifiziert worden sein. In Frage kommende reibungsvermindernde Additive können PTFE, PVC, Graphit, Silikon, Molybdändisulfit o. ä. sein. Selbstverständlich können die HDPE-Beschichtungen weitere übliche Additive enthalten, wie sie für PE-Folien verwendet werden.

Die Dicke der HDPE-Beschichtung liegt vorzugsweise zwischen 20 und 400 µm, bevorzugt zwischen 50 und 200 µm, insbesondere zwischen 80 und 120 µm.

Für das Aufbringen der HDPE-Beschichtung kann eine übliche Haftvermittlerschicht verwendet werden, die eine modifizierte PE-Schicht sein kann. Das Aufbringen kann auch mit Klebern erfolgen, die für die Herstellung einer Klebverbindung zwischen dem Material des Riemenkörpers, beispielsweise Polyurethan, und der Polyethylen-Beschichtung bzw. Polyethylen-Folie geeignet sind.

Da die erfindungsgemäße HDPE-Beschichtung nunmehr eine erhöhte Verweildauer auf der Oberfläche des Kraftübertragungsriemens aufweist, ist für manche Anwendungsfälle vorteilhaft, wenn die HDPE-Beschichtung als antistatische Oberfläche ausgebildet ist. Es ist daher vorteilhaft, wenn die HDPE-Beschichtung bzw. HDPE-Folie durch leitfähige Additive, bspw. durch Carbon Nanotubes oder Ruß als Additiv mit einer erhöhten Leitfähigkeit ausgerüstet wird, sodass die Oberfläche antistatisch wirkt. Die Bildung einer antistatischen Oberfläche eines Kraftübertragungsriemens mittels einer haltbar ausgebildeten HDPE-Beschichtung oder HDPE-Folie hat eine eigenständige Bedeutung und ist nicht auf die Verwendung einer durch Bestrahlung haltbarer gemachten HDPE-Beschichtung oder -Folie beschränkt. Diese Maßnahme ist immer dann sinnvoll, wenn die HDPE-Beschichtung oder -Folie im Wesentlichen über die gesamte Laufzeit des Kraftübertragungsriemens auf diesem verbleibt.

Die Erfindung soll im Folgenden anhand von in der Zeichnung schematisch dargestellten Ausführungsbeispielen näher erläutert werden. Es zeigen:
- Figur 1: - einen Längsschnitt durch einen Zahnriemen mit einer mehrschichtigen Beschichtungsanordnung auf der Zahnseite;
- Figur 2: - einen Längsschnitt durch einen Zahnriemen mit einer mehrschichtigen Beschichtungsanordnung auf der Riemenrückseite;
- Figur 3: - einen Längsschnitt durch einen Zahnriemen mit einer einschichtigen Polyethylen-Beschichtung auf der Riemenrückseite.

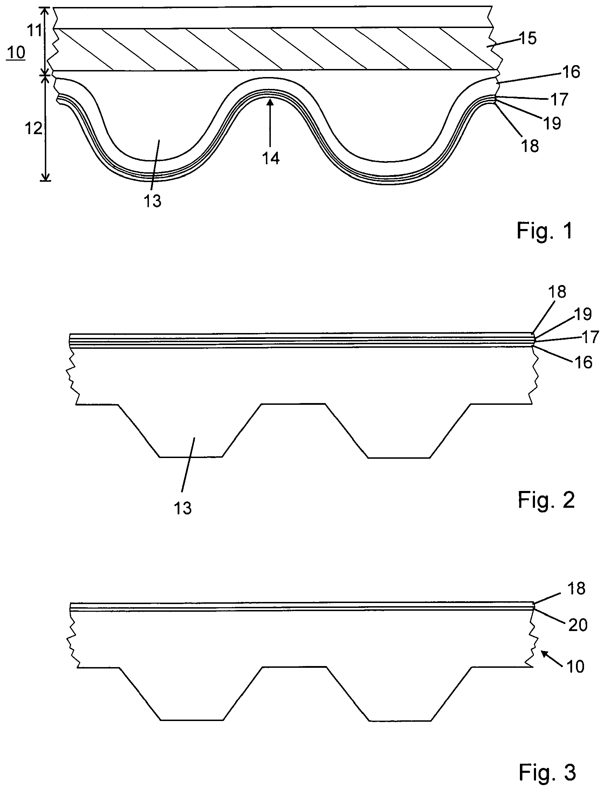

Der in Figur 1 dargestellte Kraftübertragungsriemen ist ein Zahnriemen 10 dessen Riemenkörper einen Grundkörper 11 und eine Kraftübertragungszone 12 aufweist. Die Kraftübertragungszone 12 weist Zähne 13 auf, zwischen denen sich Zahnzwischenräume 14 befinden. In dem Grundkörper 11 verlaufen in Längsrichtung des Zahnriemens 10 Zugstränge 15, die üblicherweise aus horizontal nebeneinander angeordneten Metalldrähten bestehen.

Die Oberfläche der Kraftübertragungszone 12 ist in dem dargestellten Ausführungsbeispiel durch eine Textilschicht 16 bedeckt, die die Abriebbeständigkeit des Zahnriemens 10 im Bereich der Kraftübertragungszone 12 erhöhen soll. Ein für viele Anwendungsfälle vorteilhaftes Material für den Riemenkörper ist Polyurethan. Um einen Durchtritt des klebrigen Polyurethans durch die Textilschicht 16 zu vermeiden, ist diese mit einer Imprägnierschicht 17 aus Copolyamid beschichtet, wobei das Copolyamid so aufgebracht wird, dass es teilweise in die Textilschicht eindringt. Die Imprägnierschicht 17 ist mit einer Polyethylen-Beschichtung 18 aus HDPE abgedeckt, wobei zwischen der Polyethylen-Beschichtung 18 und der Imprägnierschicht 17 eine Haftvermittlerschicht 19 zwischengeschaltet ist. Die Haftvermittlerschicht 19 kann aus LLDPE bestehen und in bekannter Weise modifiziert sein.

Die Polyethylen-Beschichtung 18 weist eine Stärke von etwa 100 µm auf und wird vorzugsweise in Form einer HDPE-Folie aufgebracht und thermisch fixiert. Die Polyethylen-Beschichtung kann insbesondere in Form der Folie vor dem Aufbringen mit Gamma-Strahlung bestrahlt worden sein, wobei eine Strahlungsdosis zwischen 40 und 80 kGy, insbesondere zwischen 60 und 70 kGy, vorzugsweise 65 kGy, angewendet worden ist. Die Polyethylen-Beschichtung 18 ist durch die Bestrahlung modifiziert worden, indem insbesondere lange Polymerketten gespalten worden sind und eine zusätzliche Vernetzung stattgefunden hat. Eine entsprechende Modifikation der Polyethylen-Beschichtung ist auch durch eine Beta-Strahlung möglich, wobei vorzugsweise erhöhte Strahlungsdosen von bis zu 300 kGy verwendet werden.

Bei dem in Figur 2 dargestellten Ausführungsbeispiel befinden sich die Schichten 16, 17, 18 und 19 in gleicher Reihenfolge auf der Oberfläche des Riemenrückens, also auf der Oberfläche, die den Zähnen 13 abgewandt ist. Diese Ausführungsform ist geeignet, um einer starken Belastung des Riemenrückens Rechnung zu tragen.

Selbstverständlich können die Ausführungsbeispiele der Figuren 1 und 2 auch miteinander kombiniert sein, sodass der Zahnriemen 10 die Schichtenfolge 16 bis 19 sowohl auf der Zahnseite als auch auf der Riemenrückenseite aufweisen kann. Weiter ist selbstverständlich, dass auch andere Riemenformen mit entsprechenden Schichten vorteilhaft versehen werden können, beispielsweise Keilriemen und Flachriemen.

Bei dem in Figur 3 dargestellten Ausführungsbeispiel befindet sich die Polyethylen-Beschichtung 18 ebenfalls auf der Riemenrückseite, ist dort aber ohne Textilschicht 16 und Imprägnierschicht 17 direkt mit Hilfe einer Schicht eines Klebstoffs 20 aufgebracht.

In allen Fällen kann die Bestrahlung der Polyethylen-Beschichtung 18 auch erfolgen, nachdem die Polyethylen-Beschichtung 18 aufgebracht worden ist. Dies hat den Vorteil, dass die PE-Schicht für das Aufbringen der Polyethylen-Beschichtung 18 gute Fließeigenschaften hat und erst durch die anschließende Bestrahlung in den Eigenschaften, auch den Fließeigenschaften, verändert wird.

### Belastungstests

Die Gebrauchseigenschaften der Riemen wurden getestet, indem Endlosriemen mit einem Riemenaufbau und Querschnittsprofil wie grundsätzlich in Figur 1 gezeigt auf einer 2-Scheiben-Anordnung einer hohen dynamischen Belastung ausgesetzt wurden.

Jeder Lauf wurde durchgeführt bis erkennbare Schäden an der außen liegenden Polyethylen-Beschichtung 18 auftraten. Die Prüfstandparameter wurden für alle Versuche konstant gehalten.

Prüfstandparameter:
2-Scheiben Aufbau: Endlosriemen über zwei gleichgroße Scheiben umlaufend;
Riemenscheiben: Typ G Profil nach ISO 13050, je 25 Zähne, Teilung (pitch) 8 mm;
Scheibengeschwindigkeit: Drehzahl 1000 min⁻¹;
Installationsvorspannung: 600N pro Seite;
Drehmoment: 35 Nm;
Riemengröße: 112 Zähne, Breite 12 mm, Teilung/pitch 8mm (8M).
gegossene PU-Riemen mit Textilauflage und Kunststoff-Mehrschichtbeschichtung (Fig. 1)

### 1. Vergleichsversuche:

Eine erste Testreihe wurde an Riemen mit einer nicht-bestrahlten HDPE-Beschichtung 18 durchgeführt. Der grundsätzliche Aufbau der Beschichtung auf der Textilauflage 16 war:
- Imprägnierungsschicht 17 - Co-Polyamid (40µm)
- Haftvermittlerschicht 19 - LLDPE (20 - 60 µm)
- (außenseitig) PE-Beschichtung 18 -HDPE (30 - 100 µm)

Bei allen Versuchen ergab sich unter Variation der Schichtdicken kein wesentlicher Unterschied in der maximalen Laufdauer. In jedem Fall waren die Vergleichsriemen mit nicht bestrahlter HDPE-Beschichtung an den Flanken der Kraftübertragungszone 12 unter der hohen Testbelastung nach maximal 48 Stunden abgerieben. Dabei lösten sich Teile der PE-Beschichtung 18 zum Ende der Maximallaufzeit ab (Flake-Ablösung). Die abgelösten HDPE-Teile waren umso größer je dicker die Beschichtung 18 war.

### 2. Belastungstests an erfindungsgemäßen Riemen

Mit dem gleichen Testaufbau und unter den gleichen Testbedingungen wurden Riemen geprüft, die sich den Vergleichsriemen nur dadurch unterschieden, dass die Beschichtung 18 bestrahlt worden war, wie in der Beschreibung angegeben.

Für diese Versuche war eine coextrudierte Mehrschichtfolie aus den Filmen für die Schichten 17, 19 und 18 von der HDPE-Seite, d.h. auf der Oberfläche der Beschichtung 18, bestrahlt worden (Schichtabfolge, s.u. Vergleichsversuche). Die Riemenherstellung war ansonsten identisch zu der der Vergleichsriemen. In beiden Fällen wurde der Beschichtungsfolienverbund auf der Textilauflage 16 thermisch fixiert, und es wurde in üblicher Weise ein Polyurethanriemen gegen den Rücken der Textilauflage 16 gegossen.

Die erfindungsgemäßen Ausführungsbeispiele mit bestrahlter Beschichtung 18 erreichten unter der hohen Testbelastung Maximallaufzeiten zwischen 100 und 150 Stunden, d.h. zwei- bis dreimal so lange wie ohne Bestrahlung der PE-Außenbeschichtung 18.

Es konnte somit gezeigt werden, dass die Abriebbeständigkeit des Riemens bei bestrahlter äußerer Beschichtung signifikant erhöht war.

Die Erfindung eignet sich selbstverständlich für endlos hergestellte Kraftübertragungsriemen ebenso wie für mit offenen Enden hergestellte Kraftübertragungsriemen.

Obwohl die vorliegende Erfindung insbesondere für Kraftübertragungsriemen mit Riemenkörpern aus einem thermoplastischen oder einem gießfähigen duroplastischen Polyurethan besonders vorteilhaft ist, kann sie auch bei Kraftübertragungsriemen mit einem Riemenkörper aus einem anderen gebräuchlichen Material mit Vorteil eingesetzt werden.

## Patentansprüche

1. Kraftübertragungsriemen mit einem einen Grundkörper (11) und eine daran ausgebildete Kraftübertragungszone (12) aufweisenden Riemenkörper sowie mit einer Polyethylen-Beschichtung (18) auf wenigstens einer Oberfläche des Riemenkörpers, wobei die Polyethylen-Beschichtung (18) aus HDPE besteht, **dadurch gekennzeichnet, dass** die Polyethylen-Beschichtung (18) aus HDPE zur Erhöhung ihrer Beanspruchungsbeständigkeit einer Bestrahlung mit einer Dosis zwischen 30 und 300 kGy unterworfen worden ist.

2. Kraftübertragungsriemen nach Anspruch 1, **dadurch gekennzeichnet, dass** die Polyethylen-Beschichtung (18) eine bezüglich der Beanspruchung äußere Schicht eines mehrlagigen Beschichtungsaufbaus (16 -19) ist.

3. Kraftübertragungsriemen nach Anspruch 1 oder 2, **dadurch gekennzeichnet, dass** der Riemenkörper eine Textilauflage (16) aufweist, auf der sich die Polyethylen-Beschichtung (18) befindet.

4. Kraftübertragungsriemen nach Anspruch 3, **dadurch gekennzeichnet, dass** die Textilauflage (16) mit einer Imprägnierungsschicht (17) aus einem Copolyamid versehen ist.

5. Kraftübertragungsriemen nach einem der Ansprüche 1 bis 4, **dadurch gekennzeichnet, dass** die Polyethylen-Beschichtung (18) mit einem reibungsvermindernden Additiv modifziert ist.

6. Kraftübertragungsriemen nach einem der Ansprüche 1 bis 5, **dadurch gekennzeichnet, dass** die Polyethylen-Beschichtung (18) in Form einer Folie aufgebracht ist.

7. Kraftübertragungsriemen nach Anspruch 6, **dadurch gekennzeichnet, dass** zwischen der die Polyethylen-Beschichtung (18) bildenden Folie und einer sie tragenden Oberfläche eine Haftvermittlerschicht (19, 20) angeordnet ist.

8. Kraftübertragungsriemen nach Anspruch 7, **dadurch gekennzeichnet, dass** die Haftvermittlerschicht (19, 20) eine modifizierte PE-Schicht ist.

9. Kraftübertragungsriemen nach einem der Ansprüche 1 bis 8, **dadurch gekennzeichnet, dass** die Dicke der Polyethylen-Beschichtung (18) zwischen 20 und 400 µm beträgt.

10. Kraftübertragungsriemen nach einem der Ansprüche 1 bis 9, **dadurch gekennzeichnet, dass** die Polyethylen-Beschichtung (18) einer Bestrahlung mit Gamma-Strahlen mit einer Dosis zwischen 30 und 80 kGy unterworfen worden ist.

11. Kraftübertragungsriemen nach einem der Ansprüche 1 bis 9, **dadurch gekennzeichnet, dass** die Polyethylen-Beschichtung (18) einer Bestrahlung mit Beta-Strahlen mit einer Dosis zwischen 150 und 300 kGy unterworfen worden ist.

12. Kraftübertragungsriemen nach einem der Ansprüche 1 bis 11, **dadurch gekennzeichnet, dass** die Polyethylen-Beschichtung (18) durch leitfähige Additive antistatisch ausgebildet ist.

## Claims

1. Force transmission belt with a belt structure comprising a belt body (11) and comprising a force transmission zone (12), and also with a polyethylene coating (18) on at least one surface of the belt structure, wherein the polyethylene coating (18) is composed of HDPE, **characterized in that** the polyethylene coating (18) composed of HDPE has been subjected to irradiation with a dose of from 30 to 300 kGy in order to increase its wear resistance.

2. Force transmission belt according to Claim 1, **characterized in that** the polyethylene coating (18) is a layer that, within a multiple-ply coating structure (16-19), is exterior in relation to the cause of wear.

3. Force transmission belt according to Claim 1 or 2, **characterized in that** the belt structure has a textile overlayer (16) on which the polyethylene coating (18) is present.

4. Force transmission belt according to Claim 3, **characterized in that** an impregnation layer (17) made of a copolyamide has been provided to the textile overlayer (16).

5. Force transmission belt according to any of Claims 1 to 4, **characterized in that** the polyethylene coating (18) has been modified with a friction-reducing additive.

6. Force transmission belt according to any of Claims 1 to 5, **characterized in that** the polyethylene coating (18) has been applied in the form of a film.

7. Force transmission belt according to Claim 6, **characterized in that** there is an adhesion-promoter layer (19, 20) arranged between the film that forms the polyethylene coating (18) and a surface supporting said coating.

8. Force transmission belt according to Claim 7, **characterized in that** the adhesion-promoter layer (19, 20) is a modified PE layer.

9. Force transmission belt according to any of Claims 1 to 8, **characterized in that** the thickness of the polyethylene coating (18) is from 20 to 400 µm.

10. Force transmission belt according to any of Claims 1 to 9, **characterized in that** the polyethylene coating (18) has been subjected to irradiation with gamma-radiation with a dose of from 30 to 80 kGy.

11. Force transmission belt according to any of Claims 1 to 9, **characterized in that** the polyethylene coating (18) has been subjected to irradiation with beta radiation with a dose of from 150 to 300 kGy.

12. Force transmission belt according to any of Claims 1 to 11, **characterized in that** the polyethylene coating (18) has been rendered antistatic via conductive additives.

## Revendications

1. Courroie de transfert de force comprenant un corps de courroie comprenant un corps de base (11) et une zone de transfert de force (12) formée sur celui-ci, et comprenant un revêtement de polyéthylène (18) sur au moins une surface du corps de courroie, le revêtement de polyéthylène (18) étant constitué d'HPDE, **caractérisée en ce que** le revêtement de polyéthylène (18) en HPDE a été soumis à une exposition à un rayonnement avec une dose comprise entre 30 et 300 kGy pour augmenter sa résistance aux sollicitations.

2. Courroie de transfert de force selon la revendication 1, **caractérisée en ce que** le revêtement de polyéthylène (18) est une couche extérieure au regard de la sollicitation d'une structure de revêtement multicouche (16-19).

3. Courroie de transfert de force selon la revendication 1 ou 2, **caractérisée en ce que** le corps de courroie comprend un revêtement textile (16), sur lequel se trouve le revêtement de polyéthylène (18).

4. Courroie de transfert de force selon la revendication 3, **caractérisée en ce que** le revêtement textile (16) est muni d'une couche d'imprégnation (17) en un copolyamide.

5. Courroie de transfert de force selon l'une quelconque des revendications 1 à 4, **caractérisée en ce que** le revêtement de polyéthylène (18) est modifié avec un additif réduisant les frottements.

6. Courroie de transfert de force selon l'une quelconque des revendications 1 à 5, **caractérisée en ce que** le revêtement de polyéthylène (18) est appliqué sous la forme d'un film.

7. Courroie de transfert de force selon la revendication 6, **caractérisée en ce qu'**une couche de promoteur d'adhésion (19, 20) est agencée entre le film formant le revêtement de polyéthylène (18) et une surface le portant.

8. Courroie de transfert de force selon la revendication 7, **caractérisée en ce que** la couche de promoteur d'adhésion (19, 20) est une couche de PE modifiée.

9. Courroie de transfert de force selon l'une quelconque des revendications 1 à 8, **caractérisée en ce que** l'épaisseur du revêtement de polyéthylène (18) est comprise entre 20 et 400 µm.

10. Courroie de transfert de force selon l'une quelconque des revendications 1 à 9, **caractérisée en ce que** le revêtement de polyéthylène (18) a été soumis à une exposition à des rayonnements gamma avec une dose comprise entre 30 et 80 kGy.

11. Courroie de transfert de force selon l'une quelconque des revendications 1 à 9, **caractérisée en ce que** le revêtement de polyéthylène (18) a été soumis à une exposition à des rayonnements bêta avec une dose comprise entre 150 et 300 kGy.

12. Courroie de transfert de force selon l'une quelconque des revendications 1 à 11, **caractérisée en ce que** le revêtement de polyéthylène (18) est rendu antistatique par des additifs conducteurs.
